(19) **Europäisches Patentamt / European Patent Office / Office européen des brevets**

(11) **EP 2 018 485 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(21) Anmeldenummer: **07724435.8**

(22) Anmeldetag: **20.04.2007**

(51) Int Cl.:
***F16B 35/06*** ^(2006.01)

(86) Internationale Anmeldenummer:
**PCT/EP2007/003499**

(87) Internationale Veröffentlichungsnummer:
**WO 2007/134679 (29.11.2007 Gazette 2007/48)**

(54) **SENKKOPFSCHRAUBE**

COUNTERSUNK HEAD SCREW

BOULON A TETE FRAISEE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **19.05.2006 DE 102006023708**

(43) Veröffentlichungstag der Anmeldung:
**28.01.2009 Patentblatt 2009/05**

(73) Patentinhaber: **Ludwig Hettich & Co.**
**78713 Schramberg-Sulgen (DE)**

(72) Erfinder: **HETTICH, Ulrich**
**78713 Schramberg (DE)**

(74) Vertreter: **Liesegang, Eva**
**Forrester & Boehmert**
**Pettenkoferstrasse 20-22**
**80336 München (DE)**

(56) Entgegenhaltungen:
**WO-A1-99/17908      GB-A- 191 224 725**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Senkkopfschraube mit einem zylindrischen Schaft und einem im wesentlichen kegeligen Senkkopf, der mindestens zwei Kanten an der Unterseite aufweist.

Eine bekannte Senkkopfschraube dieser Art (DE 33 34 212 A1) weist an der Unterseite des Senkkopfes Nuten auf, die sich vom Schaft bis zu einer zylindrischen Mantelfläche direkt unterhalb der Stirnfläche des Schraubenkopfes erstrecken. Die Nuten haben eine entgegen der Drehrichtung der Schraube zunehmende Tiefe und bilden an der tiefsten Stelle des Nutengrundes jeweils eine Schneidkante. Die Nuten sind mit konkaver Wölbung aus dem Schraubenkopf ausgekehlt, was bei der Herstellung durch Prägen eine starke Materialverdrängung erfordert. Aufgrund der Geometrie der Nuten muß Material gerade auch im Bereich hinter der Schneidkante weggenommen werden, was ungünstig für die Abstützung der Schneidlasten ist und die Lebensdauer der Schneidkante einschränkt.

Eine Schneidwirkung soll bei der bekannten Schraube zum Schneiden oder Fräsen eines Senkloches in das mit der Schraube zu befestigende Material genutzt werden, z.B. in Holz. Jedoch wäre bei Einsatz einer Senkkopfschraube zur Befestigung von Metallteilen anstelle einer Schneidwirkung eine Sperrwirkung zur Sicherung gegen Lösen von Vorteil.

Die genannten Schneidkanten und zugehörige Nuten sind negativ an Prägewerkzeugen vorzusehen, die gewöhnlich aus Stahl gefertigt werden. Solche Werkzeuge haben jedoch sehr niedrige Lebensdauer und sind daher für eine wirtschaftliche Produktion nur bedingt geeignet. Hartmetallwerkzeuge haben zwar eine hohe Lebensdauer, sind aber aufwendig zu bearbeiten, beispielsweise durch Erodieren oder mit anderen aufwendigen spanenden Verfahren.

Die Geometrie des Senkkopfes hat ebenfalls großen Einfluß auf die Lebensdauer der Werkzeuge, weil Kanten zu Verschleiß und Ausbrüchen neigen. Im Bereich der Kanten können aufgrund der Geometrie hohe Kerbspannungen mit Spannungsspitzen entstehen, was die Lebensdauer reduziert.

Eine solche Schraube ist auch als Knochenschraube aus der WO2004/052219 A1 bekannt.

Es ist auch eine Senkkopfschraube mit den Merkmalen des Oberbegriffs des Anspruchs 1 bekannt (GB 2 227 540A), bei der zwei oder vier Schneidkanten auf einer kegeligen Rotationsfläche an der Unterseite des Schraubenkopfes liegen, wobei die Rotationsfläche eine mit der Schaftachse zusammenfallende Achse hat.

Es ist Aufgabe der Erfindung, eine Senkkopfschraube der beschriebenen Art so auszubilden, daß sie wirtschaftlich hergestellt werden kann, wobei vorzeitiger Verschleiß der Formwerkzeuge aufgrund der Geometrie der Senkkopfschraube vermieden werden und je nach Einsatzzweck der Senkkopfschraube eine Schneidwirkung oder eine Sperrwirkung ohne grundsätzliche Änderung der Geometrie erzeugt werden soll.

Zur Lösung dieser Aufgabe dient Patentanspruch 1.

Vorteilhafte Ausgestaltungen der Erfindung sind in den Unteransprüchen angegeben.

Aufgrund der beanspruchten Geometrie der Unterseite des Senkkopfes läßt sich ein Hartmetallwerkzeug zur Großserienfertigung der Senkkopfschraube vergleichsweise einfach herstellen, insbesondere durch Schleifen, was zu hohen Standzeiten führt. Dabei ist das Ausbrechen oder Abnutzen von Kanten aufgrund der beanspruchten Geometrie weitgehend vermieden.

Die Erfindung ist im folgenden anhand schematischer Zeichnungen an Ausführungsbeispielen mit weiteren Einzelheiten näher erläutert. Es zeigen

Fig. 1      eine Schraube mit vier kegelförmigen Teilflächen an der Unterseite des Kopfes, und zwar
            Fig. 1a eine perspektivische Ansicht von der Unterseite her;
            Fig. 1b eine Seitenansicht;
            Fig. 1c eine Unteransicht;
            Fig. 1d einen Schnitt nach der Linie A-A in Fig. 1c;

Fig. 2      eine Senkkopfschraube ähnlich Fig. 1, bei der jedoch die Achsenlagen von Schaft und kegeligen Teilflächen relativ zueinander geändert sind, und zwar
            Fig. 2a eine Seitenansicht;
            Fig. 2b eine Unteransicht;
            Fig. 2c eine gegenüber Fig. 2a um 90° gedrehte Seitenansicht;

Fig.3       eine Senkkopfschraube gemäß der Erfindung mit Sperrwirkung gegen ein Lösen, und zwar
            Fig. 3a in einer perspektivischen Darstellung von unten;
            Fig. 3b in einer Seitenansicht;
            Fig. 3c in einem Schnitt nach der Linie B-B in Fig. 3b;

Fig. 4      eine Senkkopfschraube mit Schneidwirkung, und zwar
            Fig. 4a in einer perspektivischen Ansicht;
            Fig. 4b in einer Seitenansicht;
            Fig. 4c in einem Schnitt nach der Linie C-C in Fig. 4b;

Fig. 5      eine Senkkopfschraube gemäß der Erfindung mit Verformungswirkung und zwar
            Fig. 5a in einer perspektivischen Darstellung von unten;
            Fig. 5b in einer Seitenansicht; und
            Fig. 5c in einem Schnitt nach der Linie D-D in Fig.5b.

Auch bei den nachfolgenden Figuren sind mit "a" jeweils die perspektivische Darstellung von unten, mit "b" die Seitenansicht und mit "c" eine Unteransicht der Senkkopfschraube dargestellt, was zur Vermeidung von Wiederholungen nicht nochmals einzeln aufgeführt ist.

So zeigen

Fig. 6    eine Senkkopfschraube gemäß der Erfindung, für welche die Beziehung 2\*$\alpha$ + $\beta$ = 90° gilt;

Fig. 7    eine Senkkopfschraube gemäß der Erfindung, für welche die Beziehung 2\*$\alpha$ + $\beta$ = 120° gilt; und

Fig. 8    eine Senkkopfschraube gemäß der Erfindung, für welche die Beziehung 2\*$\alpha$ + $\beta$ = 160° gilt, wobei $\alpha$ der Neigungswinkel der Achse der Rotationsfläche und $\beta$ der Ke- gelwinkel dieser Rotationsfläche gemäß Fig. 1d ist;

Fig. 9    eine Senkkopfschraube gemäß der Erfindung ähnlich Fig. 6, jedoch mit einer Schräg- fläche am Übergang zwischen Schaft und Senkkopf;

Fig. 10    bis 14 Senkkopfschrauben mit jeweils 2, 3, 6, 8 und 12 Teilflächen.

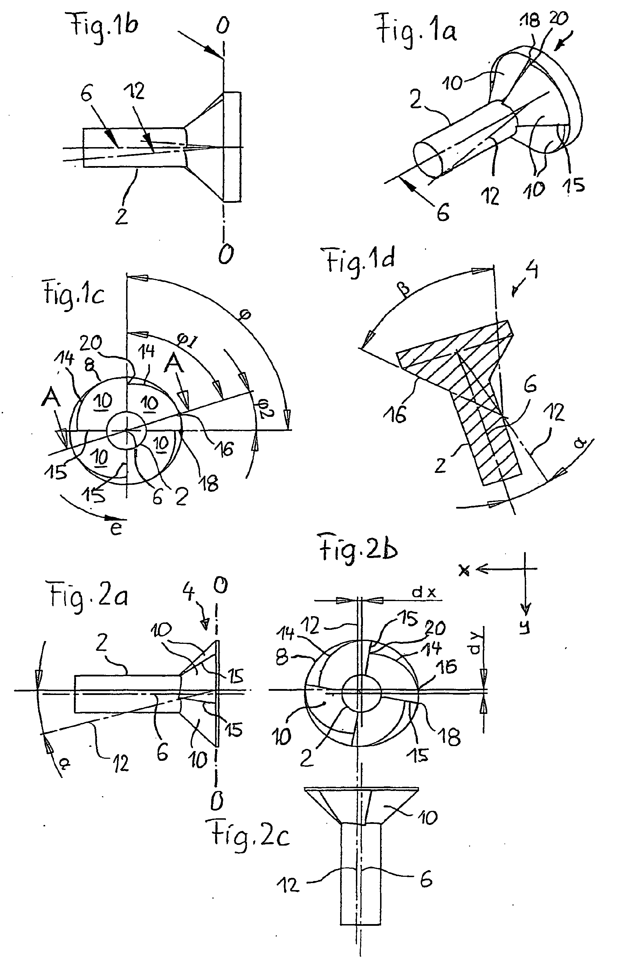

Die Fig. 1 zeigt eine erste Ausführung einer Senkkopfschraube gemäß der Erfindung mit einem Schaft 2 und einem Senkkopf 4, der als Rohling auf seiner Unterseite eine "gedachte" Kegelfläche hat, welcher eine mit der Schaftachse 6 gemeinsame Achse hat. Die Basis dieser Kegelfläche erscheint in Fig. 1c als Basiskreis 8. An der Unterseite des Senkkopfes 4 sind insgesamt vier kegelige Teilflächen 10 ausgebildet, wobei jede Teilfläche auf einer eigenen Kegelmantelfläche liegt. Nur zu einer dieser Teilflächen 10 ist in den Fig. 1a, 1b und 1d die zugehörige Kegelachse 12 eingezeichnet, welche zur Schaftachse 6 um einen Winkel $\alpha$ geneigt ist. Der Winkel $\alpha$ kann im Bereich 0 ≤ $\alpha$ ≤ 15° liegen.

Die zugehörige Kegelmantelfläche hat einen Kegelwinkel $\beta$, der im Bereich 0 ≤ $\beta$ < 180° liegen kann. Für den Kegelwinkel $\beta$ und den Neigungswinkel $\alpha$ gilt die Beziehung

$$2 * \alpha + \beta \ < 180°,$$

wobei der Kegelwinkel $\beta$ hier 60° und der Winkel $\alpha$ hier 15° betragen.

In der Unteransicht gemäß Fig. 1c stellen sich die Basen der Teilflächen als Ellipsenbögen 14 dar, die jeweils mit zwei Enden 18, 20 an den zwei begrenzenden Kanten 15 jeder Teilfläche 10 anlaufen. Die insgesamt vier Kanten 15 markieren jeweils die etwa radialen Begrenzungen jeder Teilfläche 10. Die in Fig. 1c mit 14 bezeichnete Ellipse hat einen Scheitel 16 in der Schnittebene A-A und dort eine gemeinsame Tangente mit dem Basiskreis 8 der "gedachten" Kegelfläche. Von diesem Scheitel 16 aus ist also die Teilfläche 10 in Richtung entgegen dem Uhrzeigersinn in Umfangsrichtung (Winkel $\varphi$1) fortschreitend radial einwärts gewölbt und ebenso auch im Uhrzeigersinn (Winkel $\varphi$2), so daß das eine Ende 18 jedes Ellipsenbogens 14 etwas radial innerhalb von dem Basiskreis 8 liegt, während das andere Ende 20 des Ellipsenbogens 14 deutlich radial innerhalb des Basiskreises 8 an der Kante 15 anläuft. Die Kanten 18 und 20 markieren jeweils die beiden Enden jeder Teilfläche 10.

Der Scheitel 16 gemäß Fig. 1c erscheint in Fig. 1d als Mantellinie, welche der gedachten Kegelfläche mit Basiskreis 8 und der Teilfläche 10 gemeinsam sind. Mit $\varphi$ ist der gesamte Winkel zwischen den beiden Enden 18 und 20 des Ellipsenbogens 14 bezeichnet. $\varphi$1 be- zeichnet den großen Winkel zwischen der radial weiter innen liegenden Kante 20 und der Mantellinie bzw. dem Scheitel 16, während $\varphi$2 den kleinen Winkel zwischen dem Scheitel bzw. der Mantellinie 16 und der weiter außen liegenden Kante 18 bezeichnet.

Die Schraubeneindrehrichtung ist in Fig. 1c mit dem Pfeil e bezeichnet (Rechtsdrehung der Schraube vom Schraubenkopf her gesehen) Man erkennt, daß eine Sperrwirkung beim Ausdrehen der Schraube längs der Mantellinie 16 erzeugt wird.

Bei der Senkkopfschraube nach Fig. 2a und 2b sind ebenfalls vier Teilflächen 10 an der Unterseite des Senkkopfes 4 vorgesehen, wobei die Verteilung der Teilflächen 10 um den Umfang des Senkkopfes 4 identisch wie in Fig. 1c ist. Unterschiedlich gegenüber der Konfiguration nach Fig. 1 ist die Anordnung der Kegelachsen 12 jeder Teilfläche 10. Während nämlich bei Fig. 1 die Kegelachsen 12 die Schaftachse 6 im Bereich der Ebene 0-0 (Fig. 1b) schneiden, trifft dies für die Kegelachsen 12 bei Fig. 2 nicht zu. Vielmehr durchstoßen die Kegelachsen 12 in der Ebene 0-0 (Zeichenebene der Fig. 2b) mit Versatz dx und dy in einem x-y-Koordinatensystem, so daß sich eine entsprechende Lageänderung der Teilflächen 10 ergibt. Dieser Versatz ermöglicht eine Beeinflussung der Kantenlänge 15.

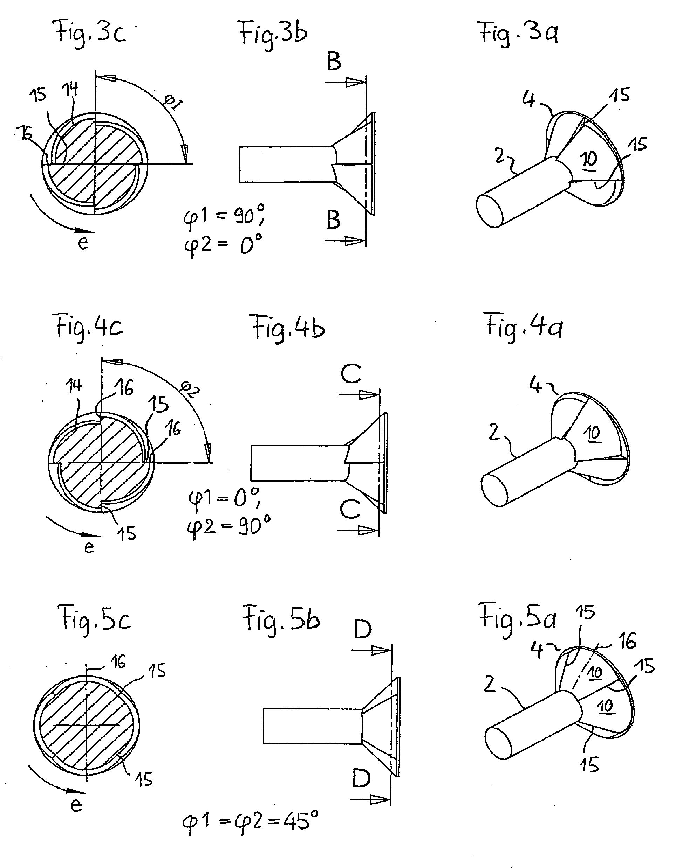

Die kegeligen Teilflächen 10 lassen sich bezüglich der Ebene A-A so in Umfangsrichtung verdreht anordnen, daß die Scheitel 16 auf die Kanten 15 fallen. Dann wird $\varphi$1 = 90° und $\varphi$2 = 0° (Fig. 3) und bei spiegel- bildlich verkehrter Anordnung $\varphi$1 = 0° und $\varphi$2 = 90° (Fig. 4).

Die Senkkopfschraube nach Fig. 3 hat eine Sperrwirkung gegen ein Lösen, wobei die mit den Kanten 15 zusammenfallenden Scheitel 16 der Ellipsenbögen den größten Widerstand entwickeln. Dagegen haben bei der Senkkopfschraube nach Fig. 4c die Kanten 15, die auch hier mit den Scheiteln 16 der Ellipsenbögen 14 zusammenfallen, eine Schneidwirkung beim Eindrehen der Schraube in Richtung des Drehpfeiles e.

Bei der Senkkopfschraube nach Fig. 5 sind die kegeligen Teilflächen 10 so über den Umfang verteilt, daß die Scheitelmantellinien 16 genau um 45° versetzt zu den beiden die Teilflächen 10 begrenzenden Kanten 15 zu liegen kommen. An diesen Scheiteln 16 erzeugt der Senkkopf 4 eine Verformungswirkung auf das Material des zu befestigenden Bauteils.

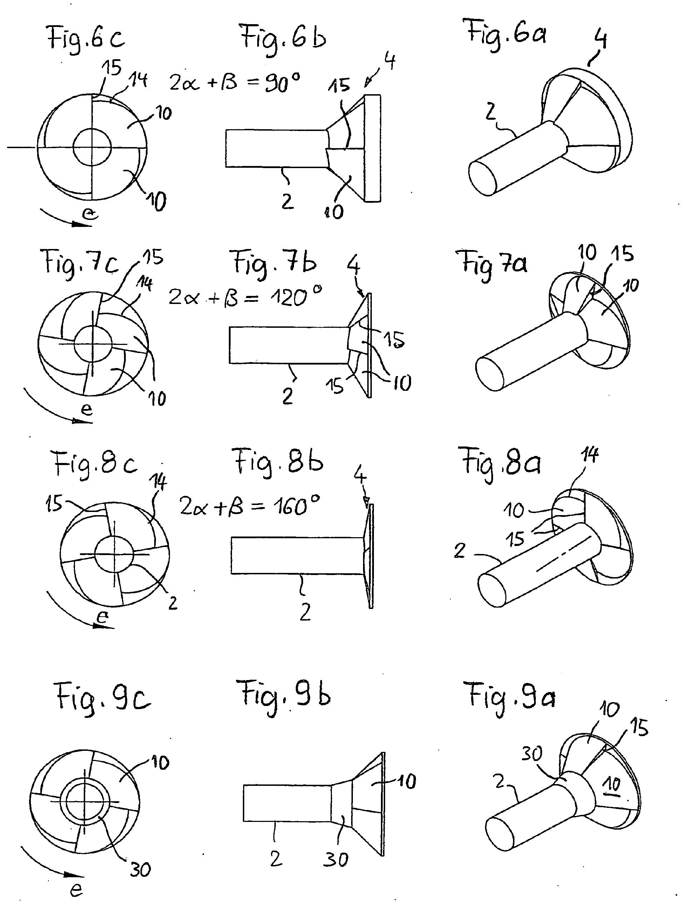

In den Fig. 6 bis 8 sind drei Senkkopfschrauben wiederum jeweils mit vier Teilflächen 10 gezeigt, wobei jedoch unterschiedliche Winkelsummen für die Bezie- hung 2$\alpha$ + $\beta$ verwendet sind. So ist 2$\alpha$ + $\beta$ = 90° in Fig.

6; die Teilflächen sind so angeordnet, daß eine Sperrwirkung von dem Senkkopf erzeugt ist.

Das gilt auch für die Senkkopfschraube nach Fig. 7, wobei jedoch $2\alpha + \beta = 120°$ ist.

Bei der Senkkopfschraube nach Fig. 8 erzeugen dagegen die Kanten 15 eine Schneidwirkung beim Eindrehen der Schraube in der Richtung des Drehpfeiles e. Hier gilt für die Winkel $2\alpha + \beta = 160°$.

Wie die Fig. 6b, 7b und 8b im Vergleich verdeutlichen, wird der Senkkopf mit zunehmender Winkelsumme $2\alpha + \beta$ immer flacher, was in Anpassung an den jeweiligen Einsatzzweck der Senkkopfschraube durchaus sinnvoll sein kann.

Die Schraube nach Fig. 9 ist ähnlich derjenigen nach Fig. 6 mit dem Unterschied, daß zwischen den kegeligen Teilflächen 10 und dem Schaft 2 ein Übergangsbereich in Gestalt einer konischen Schrägfläche oder Fase 30 vorgesehen ist. Auch diese Schraube erzeugt eine Sperrwirkung gegen unbeabsichtigtes Lösen.

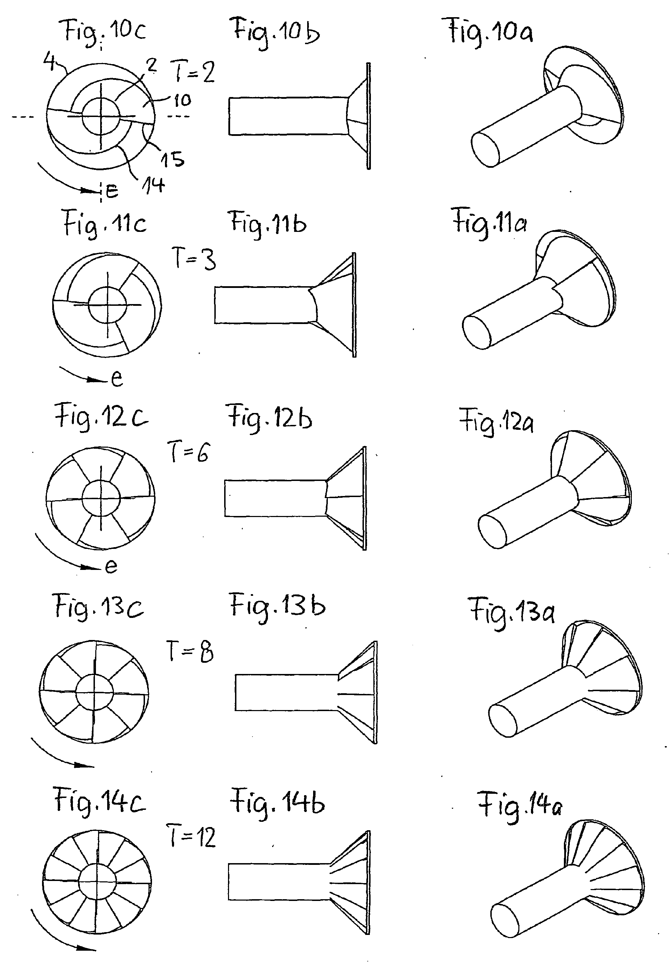

Bei den Ausführungen nach den Fig. 10 bis 14 ist die Anzahl der Teilflächen oder die Teilung T zwischen T = 2 gemäß Fig. 10 und T = 12 gemäß Fig. 14 variiert.

Die Figuren 10 bis 14 zeigen anschaulich, wie sich die Gestalt des Senkkopfes durch diese Variierung verändert. Sämtliche Teilflächen sind gleich groß und gleichmäßig um den Umfang des Senkkopfes verteilt. Eine Teilung T = 24 ist durchaus noch herstellbar und für einen geeigneten Anwendungsfall auch sinnvoll.

Hingewiesen sei noch darauf, daß die Teilflächen bei den Senkkopfschrauben nach den Fig. 10 bis 12 so angeordnet sind, daß die Kanten 15 beim Eindrehen eine Schneidwirkung erzielen, während bei den Senkkopfschrauben nach den Fig. 13 und 14 die Teilflächen 10 so angeordnet sind, daß eine Sperrwirkung erzielt ist.

**Patentansprüche**

1. Senkkopfschraube mit einem zylindrischen Schaft (2) und einem im wesentlichen kegeligen Senkkopf (4), der mindestens zwei Kanten (15) an der dem zylindrischen Schaft zugewandten Unterseite aufweist, wobei die Kanten (15) jeweils ein Ende von auf der Unterseite liegenden Teilflächen (10) markieren, von denen jede Teil einer nicht konkaven Rotationsfläche ist, **dadurch gekennzeichnet, dass** jede Rotationsfläche (10) eine eigene, mit der Schaftachse (6) nicht koinzidente Achse (12) hat, die bezüglich der Schaft-achse unter einem Neigungswinkel $\alpha$ geneigt ist.

2. Senkkopfschraube nach Anspruch 1, **dadurch gekennzeichnet, dass** jede Rotationsfläche eine die Teilfläche (10) bildende Kegelmantelfläche ist.

3. Senkkopfschraube nach Anspruch 2 , **dadurch gekennzeichnet, dass** der Kegelwinkel $\beta$ der Teilflächen (10) $\beta \leq 180°$ ist.

4. Senkkopfschraube nach Anspruch 2 oder 3, **dadurch gekennzeichnet, dass** der Neigungswinkel $\alpha$ im Bereich $0 \leq \alpha \leq 15°$ oder $25° \leq \alpha \leq 35°$ liegt.

5. Senkkopfschraube nach einem der Ansprüche 2 bis 4, **dadurch gekennzeichnet, dass** sich die Achsen (12) der die kegeligen Teilflächen aufweisenden Rotationsflächen (10) mit der Schaftachse (6) nicht schneiden.

6. Senkkopfschraube nach Anspruch 5 , **dadurch gekennzeichnet, dass** für den Kegelwinkel $\beta$ und den Neigungswinkel $\alpha$ die Beziehung $2 * \alpha + \beta < 180°$ gilt.

7. Senkkopfschraube nach Anspruch 6 , **dadurch gekennzeichnet, dass** $90° \leq 2 * \alpha + \beta \leq 160°$ ist.

8. Senkkopfschraube nach Anspruch 6 oder 7, **dadurch gekennzeichnet, dass** $2 * \alpha + \beta \leq 120°$ ist.

9. Senkkopfschraube nach einem der Ansprüche 2 bis 8, **dadurch gekennzeichnet, dass** der Übergang der Teilflächen (10) vom Senkkopf (4) zum Schaft (2) von einer Schrägfläche (30) gebildet ist.

10. Senkkopfschraube nach einem der Ansprüche 2 bis 9, **dadurch gekennzeichnet, dass** jede kegelige Teilfläche (10) eine gemeinsame Mantellinie (16) mit einer weiteren Rotationsfläche hat, welche eine mit der Schaftachse (6) gemeinsame Achse hat, und daß von dieser Mantellinie (16) ausgehend jede Teilfläche (10) bezüglich der weiteren Rotationsfläche in Umfangsrichtung fortschreitend radial einwärts gewölbt ist.

11. Senkkopfschraube nach Anspruch 10, **dadurch gekennzeichnet, dass** die weitere Rotationsfläche eine Kegelfläche ist, wobei die gemeinsame Mantellinie (16) in einer die Schaftachse enthaltenden axialen Schnittebene A-A liegt.

12. Senkkopfschraube nach Anspruch 10 oder 11, **dadurch gekennzeichnet, dass** die gemeinsame Mantellinie (16) mit einer der beiden etwa radialen Kanten (15) der betreffenden Teilfläche (10) zusammenfällt oder zwischen diesen Kanten (15) liegt.

13. Senkkopfschraube nach Anspruch 10, 11 oder 12, **dadurch gekennzeichnet, dass** die gemeinsame Mantellinie (16) bei rechtsdrehender Konfiguration eine auflaufende, schneidende Kante (15) der betreffenden Teilfläche (10) bildet.

14. Senkkopfschraube nach Anspruch 10, 11 oder 12, **dadurch gekennzeichnet, dass** die gemeinsame Mantellinie (16) bei linksdrehender Konfiguration eine ablaufende, sperrende Kante (15) der betreffenden Teilfläche (10) bildet.

15. Senkkopfschraube nach einem der vorangehenden Ansprüche, **dadurch gekennzeichnet, dass** Teilflächen (10) in einer Anzahl von 2 ≤ T ≤ 24 regelmäßig um den Umfang des Senkkopfes (4) verteilt angeordnet sind.

16. Senkkopfschraube nach Anspruch 15 , **dadurch gekennzeichnet, dass** die Anzahl T der Teilflächen 2, 3, 4, 6, 8, 12 oder 24 beträgt.

**Claims**

1. A countersunk head screw comprising a cylindrical shaft (2) and an essentially conical countersunk head (4) comprising at least two edges (15) on the lower side facing the cylindrical shaft, wherein the edges (15) each mark an end of a partial surface (10) located on the lower side, each of the partial surfaces forming part of a non-concave surface of revolution, **characterised in that** each partial surface (10) has its own axis (12) which does not coincide with the shaft axis (6), and which is inclined with respect to the shaft axis at an inclination angle α.

2. The countersunk head screw according to claim 1, **characterised in that** each surface of rotation is a cone envelope surface forming the partial surface (10).

3. The countersunk head screw according to claim 1 or claim 2, **characterised in that** the cone angle β of the partial surfaces (10) is β ≤ 180°.

4. The countersunk head screw according to any one of claims 1 to 3, **characterised in that** the inclination angle α is in the range 0 ≤ α ≤ 15° or 25° ≤ α ≤ 35°.

5. The countersunk head screw according to any one of claims 1 to 4, **characterised in that** the axes (12) of the conical partial surfaces (10) do not intersect with the shaft axis (6).

6. The countersunk head screw according to claim 5, **characterised in that** for the cone angle β and the inclination angle α, the relationship 2*α + β < 180° applies.

7. The countersunk head screw according to claim 6, **characterised in that** 90° < 2*α + β < 160°.

8. The countersunk head screw according to claim 6 or claim 7, **characterised in that** 2*α + β ≅ 120°.

9. The countersunk head screw according to any one of the claims 1 to 8, **characterised in that** the transition of the partial surfaces (10) from the countersunk head (4) to the shaft (2) is formed by an oblique surface (30).

10. The countersunk head screw according to any one of the claims 1 to 9, **characterised in that** each conical partial surface (10) has a common surface line (16) with an imaginary surface of rotation, which has an axis which is common with the shaft axis (6), and that beginning from this surface line (16), each partial surface (10), with respect to the imaginary surface of revolution, is gradually radially curved inwards in circumferential direction.

11. The countersunk head screw according to claim 10, **characterised in that** the surface of revolution is a conical surface, wherein the common surface line (16) lies in an axial section plane A-A containing the shaft axis.

12. The countersunk head screw according to claim 10 or claim 11, **characterised in that** the common surface line (16) coincides with one of the two approximately radial edges (15) of the respective partial surface (10), or is located between these edges (15).

13. The countersunk head screw according to claim 10, 11 or 12, **characterised in that** the common surface line (16) in a right-hand turning configuration forms a leading cutting edge (15) of the respective partial surface (10).

14. The countersunk head screw according to claim 10, 11, or 12, **characterised in that** the common surface line (16) in a left-hand turning configuration forms a trailing locking edge (15) of the respective partial surface (10).

15. The countersunk head screw according to any one of the preceding claims, **characterised in that** the partial surfaces (10) are uniformly distributed in a number of 2 ≤ T ≤ 24 around the circumference of the countersunk head (4).

16. The countersunk head screw according to claim 15, **characterised in that** the number T of the partial surfaces is 2, 3, 4, 6, 8, 12, or 24.

**Revendications**

1. Boulon à tête fraisée avec une tige (2) cylindrique et une tête fraisée (4) essentiellement conique qui présente au moins deux arêtes (15) sur le côté inférieur tourné vers la tige cylindrique, les arêtes (15) marquant respectivement une extrémité des surfaces partielles (10) se trouvant sur le côté inférieur, dont chacune fait partie d'une surface de rotation non concave, **caractérisé en ce que** chaque surface de rotation (10) dispose d'un propre axe (12) ne coïncidant pas avec l'axe de tige (6), qui est incliné par rapport à cet axe selon un angle d'inclinaison α.

2. Boulon à tête fraisée selon la revendication 1, **caractérisé en ce que** chaque surface de rotation est une surface enveloppe conique formant la surface partielle (10).

3. Boulon à tête fraisée selon la revendication 2, **caractérisé en ce que** l'angle conique β des surfaces partielles (10) est β α 180°.

4. Boulon à tête fraisée selon la revendication 2 ou 3, **caractérisé en ce que** l'angle d'inclinaison α se trouve dans la plage 0 ≤ α ≤ 15° ou 25° ≤ α ≤ 35°.

5. Boulon à tête fraisée selon l'une quelconque des revendications 2 à 4, **caractérisé en ce que** les axes (12) des surfaces de rotation (10) présentant les surfaces partielles coniques ne se coupent pas avec l'axe de tige (6).

6. Boulon à tête fraisée selon la revendication 5, **caractérisé en ce que** pour l'angle conique β et l'angle d'inclinaison α s'applique le rapport 2* α + β < 180°.

7. Boulon à tête fraisée selon la revendication 6, **caractérisé en ce que** 90° ≤ 2 * α + β ≤ 160°.

8. Boulon à tête fraisée selon la revendication 6 ou 7, **caractérisé en ce que** 2 * α + β ≤ 120°.

9. Boulon à tête fraisée selon l'une quelconque des revendications 2 à 8, **caractérisé en ce que** la transition des surfaces partielles (10) de la tête fraisée (4) à la tige (2) est formée par une surface biseautée (30).

10. Boulon à tête fraisée selon l'une quelconque des revendications 2 à 9, **caractérisé en ce que** chaque surface partielle conique (10) dispose d'une ligne enveloppe (16) commune avec une autre surface de rotation qui a un axe commun avec l'axe de tige (6) et **en ce qu'**en partant de cette ligne enveloppe (16), chaque surface partielle (10) est courbée radialement vers l'intérieur, s'étendant dans le sens périphérique, par rapport à l'autre surface de rotation.

11. Boulon à tête fraisée selon la revendication 10, **caractérisé en ce que** l'autre surface de rotation est une surface conique, la ligne enveloppe commune (16) se trouvant dans un plan de coupe A-A axial contenant l'axe de tige.

12. Boulon à tête fraisée selon la revendication 10 ou 11, **caractérisé en ce que** la ligne enveloppe (16) commune coïncide avec l'une des deux arêtes (15) à peu près radiale de la surface partielle concernée (10) et se trouve entre ces arêtes (15).

13. Boulon à tête fraisée selon la revendication 10, 11 ou 12, **caractérisé en ce que** la ligne enveloppe commune (16), en configuration tournant à droite, forme une arête coupante montante (15) de la surface partielle concernée (10).

14. Boulon à tête fraisée selon la revendication 10, 11 ou 12, **caractérisé en ce que** la ligne enveloppe commune (16), en configuration tournant à gauche, forme une arête bloquante (15) descendante de la surface partielle concernée (10).

15. Boulon à tête fraisée selon l'une quelconque des revendications précédentes, **caractérisé en ce que** des surfaces partielles (10) dans un nombre de 2 ≤ T ≤ 24 sont disposées réparties régulièrement autour de la périphérie de la tête fraisée (4).

16. Boulon à tête fraisée selon la revendication 15, **caractérisé en ce que** le nombre T de surfaces partielles s'élève à 2, 3, 4, 6, 8, 12, ou 24.

Fig.1b

Fig.1a

Fig.1c

Fig.1d

Fig.2a

Fig.2b

Fig.2c

Fig.3c

Fig.3b

Fig.3a

$\varphi 1 = 90°,$
$\varphi 2 = 0°$

Fig.4c

Fig.4b

Fig.4a

$\varphi 1 = 0°,$
$\varphi 2 = 90°$

Fig.5c

Fig.5b

Fig.5a

$\varphi 1 = \varphi 2 = 45°$

Fig.6c
Fig.6b $2\alpha + \beta = 90°$
Fig.6a

Fig.7c
Fig.7b $2\alpha + \beta = 120°$
Fig 7a

Fig.8c
Fig.8b $2\alpha + \beta = 160°$
Fig.8a

Fig.9c
Fig.9b
Fig.9a

Fig. 10c

4
2   T=2
10
15
14
e

Fig. 10b

Fig. 10a

Fig. 11c

T=3

Fig. 11b

Fig. 11a

e

Fig. 12c

T=6

Fig. 12b

Fig. 12a

e

Fig. 13c

T=8

Fig. 13b

Fig. 13a

Fig. 14c

T=12

Fig. 14b

Fig. 14a

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3334212 A1
- WO 2004052219 A1
- GB 2227540 A